# EUROPEAN PATENT APPLICATION

(11) **EP 4 560 477 A1**
(43) Date of publication of application: **28.05.2025**
(21) Application number: 23842660.5
(22) Date of filing: 10.05.2023
(51) Int. Cl.: G06F 11/36

(54) **SOFTWARE ANALYSIS SYSTEM, AND SOFTWARE ANALYSIS METHOD**

(30) Priority: 19.07.2022 JP 2022114474
(71) Applicant: Hitachi Astemo, Ltd., Ibaraki 312-8503 (JP)
(72) Inventor: WAKABAYASHI Noboru, Tokyo 100-8280 (JP)
(74) Representative: Strehl & Partner mbB
(86) International application number: PCT/JP2023/017534
(87) International publication number: WO 2024/018728

(57) **Abstract**

An object of the invention is to quickly specify a version of software that causes a defect even when update histories of a plurality of pieces of software are managed separately. In a software analysis system according to the invention, when a performance degradation of second software is detected by a performance test, a version updated by merging first software is specified or a version where reference information of the first software is changed from that before is specified among past versions of the second software, thereby specifying a candidate in the first software which is a cause of the degradation (see FIG. 4B).

## Description

### Technical Field

The present invention relates to a technique for analyzing a cause of software performance deterioration.

### Background Art

In an information system including a plurality of pieces of software, when performance deterioration or a defect occurs in a piece of software, a cause thereof may be in another piece of software. For example, an electronic control unit (ECU) that controls an operation of a vehicle operates in cooperation with a plurality of pieces of software, such as application side software (hereinafter referred to as ASW) and base system side software (hereinafter referred to as BSW). For example, when performance deterioration occurs in the ASW, a cause thereof may be attributed to the BSW side.

PTL 1 below discloses a technique for specifying a cause of a program performance problem. The technique disclosed in PTL 1 is as follows: "A route determination apparatus (1) includes a first difference extraction unit (21), a route extraction unit (22) and a determination unit (23). The first difference extraction unit (21) acquires a plurality of difference locations between a source code of a first program and a source code of a second program and a first coverage information of the second program. The first difference extraction unit (21) references the first coverage information and extracts a first difference location in the first coverage information from the plurality of difference locations. The route extraction unit (22) extracts, for each first difference location (31), a plurality of impact routes (32) impacted by the first difference location from the source code of the second program. The determination unit (23) acquires second coverage information of the second program and excludes an impact route in the second coverage information from the plurality of impact routes extracted by the route extraction unit (22)" (see abstract).

### Citation List

### Patent Literature

PTL 1: WO2021/124464

### Summary of Invention

### Technical Problem

A software performance test is not necessarily performed frequently, and there may be an interval over a certain period. In the related art disclosed in PTL 1, it is assumed that a software change that is a cause of performance deterioration is relatively recent. In this case, when the software change being the cause is at a time point considerably earlier than an analysis time point, a changed location thereof may not be extracted as a changed difference location and it may be difficult to discover a cause location.

When a plurality of pieces of software constituting a system each have an update history, the update history is managed for each piece of software, and thus it may be difficult or time-consuming to specify a cause part when the cause is performance deterioration or the like in software for which another developer is responsible.

The invention has been made in view of the above problems, and an object thereof is to quickly specify a version of software that causes a defect even when update histories of a plurality of pieces of software are managed separately.

### Solution to Problem

In a software analysis system according to the invention, when a performance degradation of second software is detected by a performance test, a version updated by merging first software is specified or a version where reference information of the first software is changed from that before is specified among past versions of the second software, thereby specifying a candidate in the first software which is a cause of the degradation.

### Advantageous Effects of Invention

According to the software analysis system according to the invention, it is possible to quickly specify a version of software that causes a defect even when update histories of a plurality of pieces of software are managed separately. Problems, configurations, effects, and the like other than those described above will become apparent in the following description of embodiments.

### Brief Description of Drawings

FIG. 1 schematically shows a configuration of software installed in an ECU.
FIG. 2 is a schematic diagram showing continuous integration (CI) of software.
FIG. 3 shows a problem in a case where version management is performed separately for a plurality of pieces of software.
FIG. 4A is a conceptual diagram showing a procedure of searching for a cause location of a defect in a first embodiment.
FIG. 4B is a conceptual diagram showing the procedure of searching for the cause location of the defect in the first embodiment.
FIG. 5 is a conceptual diagram showing a procedure of searching for a problematic location on a BSW side by a binary search in the related art.
FIG. 6A is a conceptual diagram showing a procedure of searching for a cause location of a defect in a software analysis method according to a second embodiment.
FIG. 6B is a conceptual diagram showing the procedure of searching for the cause location of the defect in the software analysis method according to the second embodiment.
FIG. 7 is a configuration diagram of a software analysis system 1 according to a fourth embodiment.
FIG. 8 is a flowchart showing an operation of an analysis apparatus 200.
FIG. 9 is a flowchart showing an operation of an analysis apparatus 100.
FIG. 10 is an example of a screen interface that visualizes and presents a result of specifying a problematic location that causes performance deterioration.

### Description of Embodiments

### <First Embodiment>

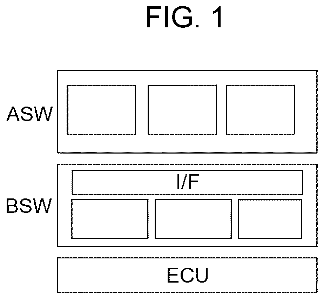

FIG. 1 schematically shows a configuration of software installed in an ECU. On the ECU, for example, application side software (ASW) and base system side software (BSW) are installed. Functionality can be mutually provided between the ASW and the BSW (or from one to the other) via an appropriate interface. For example, functionality provided by the BSW as a software function can be used by the ASW.

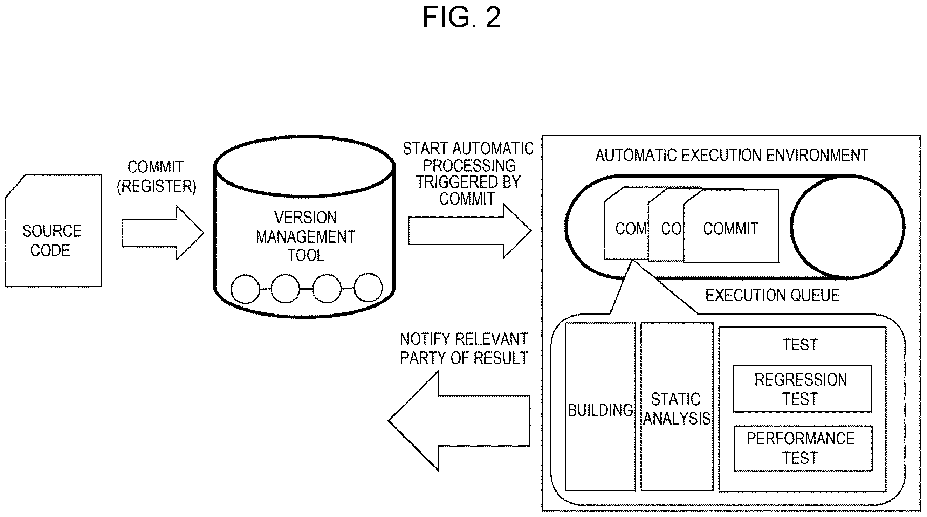

FIG. 2 is a schematic diagram showing continuous integration (CI) of software. In the CI, typically, a change history of a source code (for example, full text of the source code and a marking of a difference location for each change) is accumulated in a version management tool of the source code. Registration of the source code into the version management tool (determination of a version at that time point) is referred to as a commit. With the commit, a regression test or a performance test may be performed by executing an automatic test tool. This test includes static analysis of the source code and building (compiling the source code into an executable format) to actually execute a program. A relevant party (developer or the like) is notified of a test result.

According to the above mechanism of the CI, using automatic test functionality, a defect location is reliably reported as the test result while a time required for checking the defect is reduced, and it is possible to eliminate dependence on individuals of the test and maintain consistent test quality. However, in a part of test items in the performance test or the like, it is difficult to perform a test for each commit since a required time may be long, and thus it is common to perform the test at a regular interval (for example, every two weeks or every month). For such a test item, the time interval is required until a defect is discovered. The software analysis method in the related art is considered to have room for improvement in this regard.

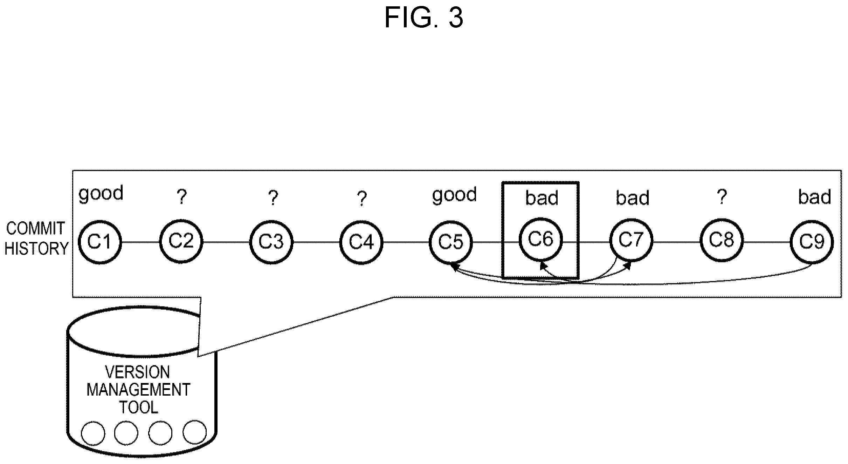

FIG. 3 shows a problem in a case where version management is performed separately for a plurality of pieces of software. The version management tool generally has functionality of searching for a source code of a problematic version (commit serial number) by, for example, a binary search. In the example in FIG. 3, a test result of a source code committed first (C1) has no problem (good), and a source code committed ninth is problematic (bad). The version management tool acquires and tests a past version (typically an intermediate version between C1 and C9, which is C5 in FIG. 3) back from C9. If a test result has no problem, the test is performed in the same manner on an intermediate version (C7 in FIG. 3) in front of (more recent than) C5. Through this iteration, it is possible to specify an oldest version among those with problematic test results (that is, a version that causes the problem in C9). At this time, the test may be performed automatically or manually.

The problematic version search using the binary search as shown in FIG. 3 can efficiently specify a problematic location. Meanwhile, it is assumed that a plurality of pieces of software operate in conjunction with each other and versions of each piece of software are managed separately. In this case, when a defect is discovered during a test of software being developed, a cause of the defect may be on another piece of software. Therefore, it is necessary to search in a version management tool of a different piece of software to specify a problematic location. However, a method for efficiently searching for a problematic location across version management tools has not been sufficiently studied so far.

In view of such a problem, a software analysis method according to a first embodiment of the invention provides a method for efficiently searching for a cause location when a result of a performance test or the like is problematic in a case where versions of a plurality of pieces of software that operate in conjunction are managed separately.

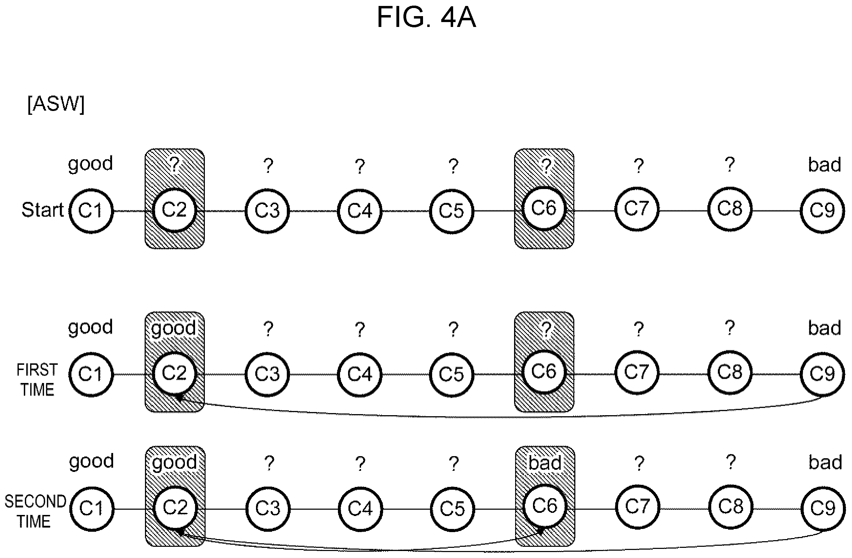

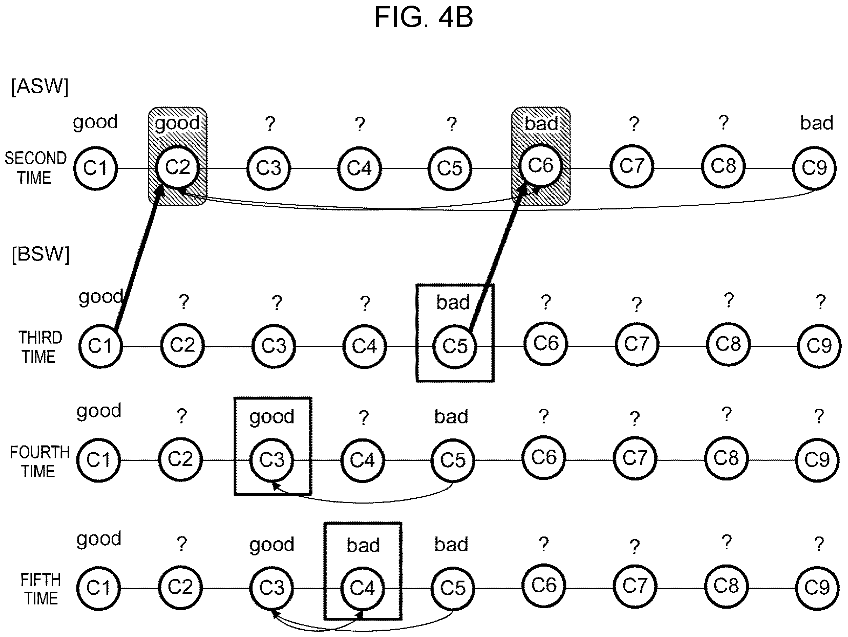

FIGS. 4A and 4B are conceptual diagrams showing a procedure for searching for a cause location of a defect in the present embodiment. A developer develops ASW in FIG. 1, and the ASW uses functionality provided by BSW. Versions of the ASW and the BSW are managed independently by separate version management tools (or separate instances or the like in the same version management tool). Here, it is assumed that a performance degradation is discovered in a performance test of the ASW and a cause thereof is attributed to the BSW side.

In a case where the ASW uses the functionality on the BSW side, the ASW may incorporate the BSW when building or testing. For example, a source code of a certain version on the BSW side (or what enables use of the BSW functionality at the time of execution on the ASW side, such as a compiled binary or a class library) may be incorporated into a development environment on the ASW side. A correspondence relationship between a BSW version that is incorporated and an ASW version that incorporates the BSW version may be predetermined in a development plan. In this example, it is assumed that it is predetermined that a commit C2 of the ASW will incorporate a commit C1 of the BSW (see FIG. 4B) and a commit C6 of the ASW will incorporate a commit C5 of the BSW (see FIG. 4B).

At a start time point in FIG. 4A, it is assumed that an initial commit performed in the past has no problem in a test result (good) and a problem is discovered in a performance test performed at the time of a ninth commit (bad). According to a procedure described below, a source code version that causes the problem is searched for on the BSW side. A search step is performed on the ASW side in a second analysis apparatus, and a search step is performed on the BSW side in a first analysis apparatus. Configurations of the analysis apparatuses will be described later. On the BSW side to be described later, it is still assumed that a performance test result of the commit C1 of the BSW is good.

In a first performance test, the second analysis apparatus specifies a version that incorporates the BSW among past versions of a source code of the ASW. Here, the commits C2 and C6 correspond thereto. The second analysis apparatus performs a performance test on an oldest one (C2) among these. Here, it is assumed that a test result is good.

In a second performance test, the second analysis apparatus performs a performance test on a latest version among the past versions where the BSW is incorporated (there are only two versions where the BSW is incorporated here, that is, C2 and C6, and C6 is latest). Here, it is assumed that a test result is problematic. The performance test performed on the ASW side is only performed on the versions where the BSW is incorporated. Therefore, the performance test on the ASW side is completed as described above.

A test target on the ASW side is limited to be within the versions where the BSW is incorporated, and a criterion for selecting a search target (test target) therefrom follows a binary search. That is, the second analysis apparatus selects the test target in the ASW source code by the binary search. For example, in FIG. 4A, if there is a past version where the BSW is incorporated in addition to C2 and C6, a target of the performance test is determined using a method of a binary search thereon.

In a third performance test (FIG. 4B), the first analysis apparatus performs a performance test on a latest version incorporated to the ASW side (here, the commit C5 of the BSW) among past versions of the BSW source code. Here, it is assumed that a test result is problematic. In this case, it can be estimated that a cause of the problem occurs at any time point in the commits C2 to C5 on the BSW side. The following search procedure is the same as the binary search.

In a fourth performance test, the first analysis apparatus performs the performance test on an intermediate version (C3 in this case) among commits C2 to C4 of the BSW. Here, it is assumed that a test result is good. In a fifth performance test, the first analysis apparatus performs the performance test on the commit C4 that is not tested among C2 to C5. Here, it is assumed that a test result is problematic. As described above, the version C4 that causes the problem on the BSW side can be specified.

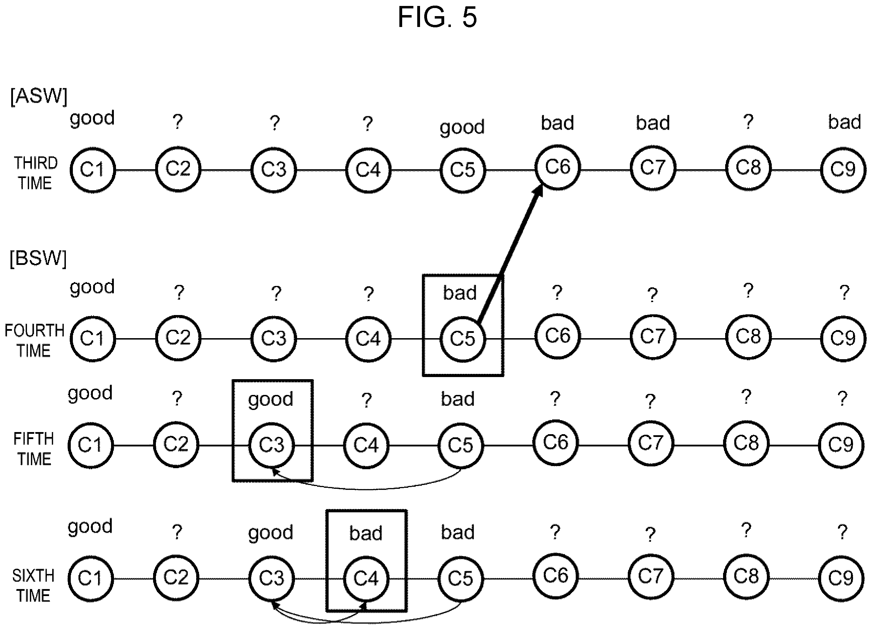

FIG. 5 is a conceptual diagram showing a procedure of searching for a problematic location on the BSW side by a binary search in the related art. On the ASW side, the second analysis apparatus searches for the problematic location by the binary search started from the commit C9. Here, a performance test is performed in an order of C9 → C5 → C7 → C6. The following procedure is the same as in FIGS. 4A and 4B. In contrast to FIG. 4A, the search target on the ASW side is not limited to a version merged with the BSW, and the performance test on C6 is performed three times. Therefore, since the number of times of the performance test is larger than that in FIGS. 4A and 4B, a longer time is required to discover the problematic location. This embodiment is more advantageous than the binary search in the related art in this respect.

### <First Embodiment: Supplement>

In contrast to the above, in the first performance test in FIG. 4A, if the performance test result of C2 is bad, the fact that an oldest one of defect locations on the ASW side is C2 can be specified at that time point. Therefore, next, a performance test may be performed on the commit C1 on the BSW side. Then, if the commit C1 of the BSW is problematic, the commit C1 is the cause of the problem, and if there is no problem with the commit C1 of the BSW, the commit C2 of the ASW is the cause of the problem. A software analysis system 1 (for example, any search unit) outputs an estimation result indicating this fact.

In contrast to the above, in the second performance test in FIG. 4A, if the performance test result of C6 is good, the problem occurs on the ASW side first in any of the commits C7 to C9 on the ASW side. This means that the cause of the problem is on the ASW side since the BSW is not incorporated therein. The software analysis system 1 (for example, any search unit) outputs an estimation result indicating this fact. In this case, it is not necessary to search for the cause across version management tools, and the problem targeted by the invention does not occur.

In contrast to the above, in the third performance test in FIG. 4B, if the performance test result of C5 is good, there is no problem on the BSW side. This is because, as a result of incorporating the BSW source code C5 with no problem into C6 of the ASW, there is a problem in C6 of the ASW. The software analysis system 1 (for example, any search unit) outputs an estimation result indicating this fact.

### <First Embodiment: Summary>

The software analysis method according to the present embodiment automatically searches for the version that is the cause of the performance deterioration on the BSW side according to the binary search. Accordingly, it is possible to eliminate dependence on individuals of the technique for specifying the problematic location and to specify the problematic location without depending on an analytical skill of an analyst.

In the software analysis method according to the present embodiment, when a commit that is the search target is specified on the ASW side, only the versions where the BSW is incorporated are treated as search targets according to the binary search. Accordingly, the search targets can be narrowed down, and a time required to specify the problematic location can be reduced as compared with the related art. For example, in the method in the related art shown in FIG. 5, the performance test is performed six times whereas the present embodiment shown in FIGS. 4A and 4B requires only five times.

The software analysis method according to the present embodiment starts from a version where BSW is incorporated on the ASW side to search for a past version on the BSW side. Accordingly, even when the versions of the ASW and the BSW are managed separately, it is possible to specify the problematic location across the version management tools efficiently.

In the software analysis method according to the present embodiment, it is not necessary to perform the performance test each time the source code is changed (for each commit), and if it is known that a performance test result is problematic at a certain time point, it is sufficient to trace back from that time point to specify the problematic location. For example, in FIG. 4A and FIG. 4B, if it is known that there is a performance problem at the time point of the commit C9, it is sufficient to perform the performance test while tracing back to past versions. Therefore, it is not necessary to prepare a physical device (for example, an ECU in an in-vehicle system) used for performing the performance test as many times as the number of performance tests.

### <Second Embodiment>

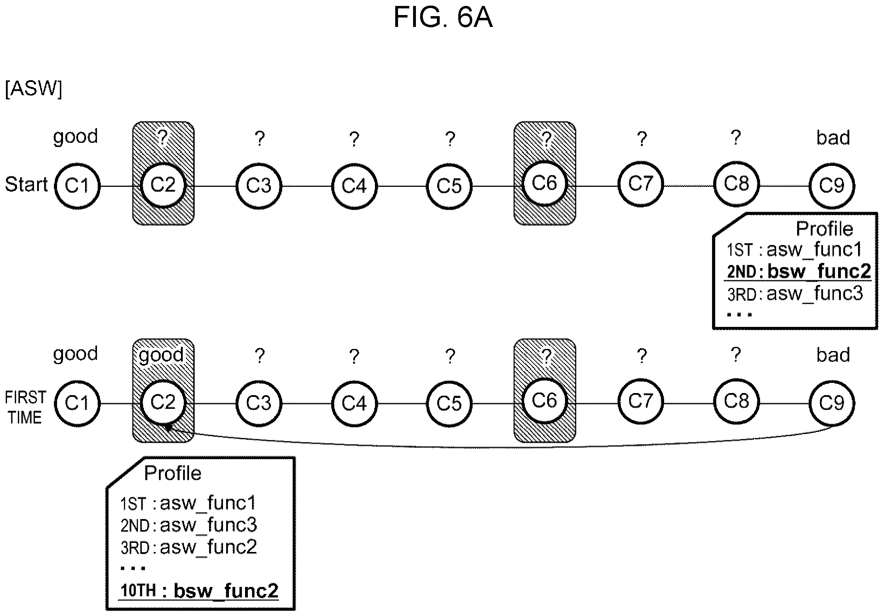

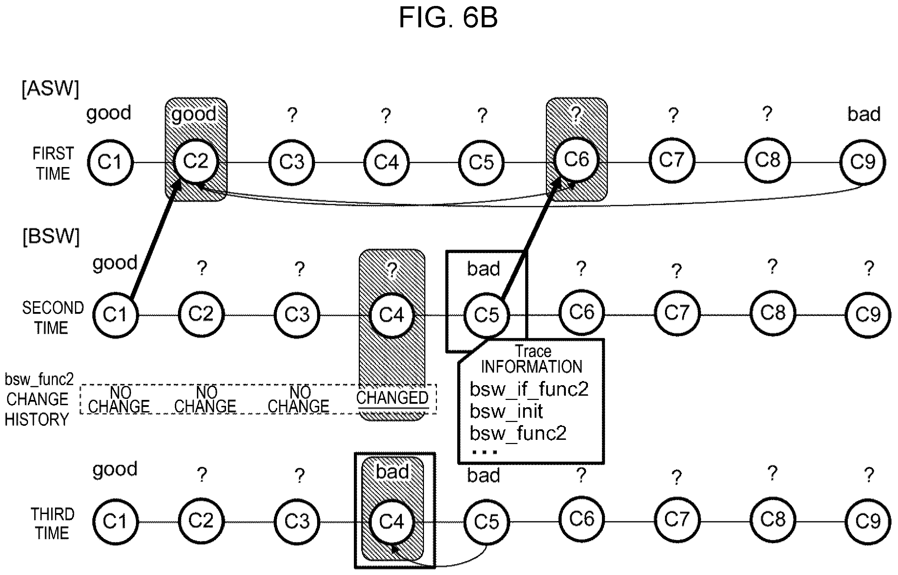

FIGS. 6A and 6B are conceptual diagrams showing a procedure of searching for a cause location of a defect in a software analysis method according to a second embodiment of the invention. In the present embodiment, in addition to the procedure described in the first embodiment, profile information of a function called in the ASW is used. The profile information is information describing statistics on call frequency of the function, and for example, if a version management tool has functionality for acquiring the statistics, such functionality may be used. Alternatively, a call may be recorded for each function during test execution. Other configurations are substantially the same as those in the first embodiment, and thus preconditions and the like are according to those in the first embodiment.

At a start time point in FIG. 6A, the second analysis apparatus acquires the profile information on the commit C9 of the ASW (the latest version where the problem is discovered by the performance test). For convenience, a name of a function provided by the ASW is started from "asw_", and a name of a function provided by the BSW is started from "bsw_".

In a first performance test, the second analysis apparatus tests the commit C2 as in FIG. 4A. Here, it is assumed that a test result has no problem. The second analysis apparatus acquires the profile information on the commit C2. When the profile information on C9 is compared with the profile information on C2, frequency of calling a function bsw_func2 greatly changes between C2 and C9, and the frequency increases in C9. In this case, it is possible to estimate that this function may be a cause of the performance degradation in C9.

In a second performance test (FIG. 6B), the first analysis apparatus performs a performance test on a latest version (C5 in FIG. 6B) among the past versions of the BSW incorporated to the ASW side. Here, it is assumed that a test result is problematic. In this case, it is assumed that the cause of the performance deterioration on the ASW side is located on the BSW side, and according to the profile information, it is estimated that the function bsw_func2 is the cause. The first analysis apparatus acquires a change history of the function bsw_func2 before the commit C5 of the BSW. Here, it is assumed that the commits C1 to C3 are not changed and the same function is changed in the commit C4.

In a third performance test, the first analysis apparatus performs a performance test on the commit C4 where the function bsw_func2 is changed. Here, it is assumed that a test result is problematic. In this case, this version is highly likely to cause the performance deterioration, and thus a detailed check may be performed on this version (in particular, a location where the function bsw_func2 is changed).

In FIG. 6A, it is estimated that the function bsw_func2 is the cause of the performance deterioration. However, depending on a structure of the function, a caller function that calls the function may also cause the performance deterioration. For example, it is assumed that the caller function calls another function before and is changed to call bsw_func2 after a certain version, and accordingly, the frequency of calling bsw_func2 on the ASW side increases. In this case, although bsw_func2 has no problem, it looks as if the same function is the cause of the deterioration based on the profile information, which is not a valid analysis result. Therefore, in this embodiment, trace information may be additionally used to increase search accuracy in such a case.

The trace information describes an order in which the ASW (or the BSW) calls functions. In the example shown in FIG. 6B, the first analysis apparatus acquires the trace information on the commit C5 during the second performance test. According to the trace information, the function bsw_func2 is called from a function bsw_init. Therefore, the first analysis apparatus acquires a change history before the commit C5 for bsw_init. Here, it is assumed that the commits C1 to C3 are not changed and the same function is changed in the commit C4.

In the third performance test, the first analysis apparatus performs the performance test on the commit C4 where the function bsw_init is changed. Here, it is assumed that a test result is problematic. In this case, this version is highly likely to cause the performance deterioration, and thus a detailed check may be performed on this version (in particular, a location where the function bsw_init is changed).

The change history of bsw_init may be investigated only when there is no history of changing bsw_func2. This is because bsw_func2 is assumed not to be the cause of the deterioration in this case. Alternatively, the change history of bsw_init may be investigated only when the performance test has no problem in the version where bsw_func2 is changed.

In the software analysis method according to the second embodiment, the number of times of the performance test is three, and thus the number of tests can be further reduced as compared to the first embodiment. As compared to the method in the related art described in FIG. 5, it is sufficient to perform half the number of tests.

### <Third Embodiment>

In the second embodiment, it is described that the profile information or the trace information is used as a basis for estimating the cause of the performance deterioration of the ASW. This is because a change in an order of calling functions may cause the performance deterioration. Other parameters that may cause the performance deterioration are listed below.

(Example 1 of Cause Parameter) When compiling a source code, a compile option is specified. For example, as an optimization option, it may be specified which of reduction in a compilation time, reduction in a binary size, and an improvement in execution performance is to be emphasized. When the compile option is changed, this change may cause the performance deterioration during execution.

(Example 2 of Cause Parameter) A change in a memory map (information on where a binary is mapped in a memory) or a mutual exclusion level on an operating system (OS) where software is executed may cause the performance deterioration during execution.

When specifying a past version of the BSW that is the test target, the first analysis apparatus may use at least one of the two parameters instead of or in combination with the trace information described in the second embodiment. For example, when the test result of C5 is problematic in FIG. 6B, a time point when the compile option is changed among the commits C2 to C4 is acquired via a change history on the version management tool. The OS parameter can be acquired in the same manner. The first analysis apparatus performs a performance test on a commit corresponding to the time point when the parameter is changed. The subsequent steps are the same as those in the second embodiment.

### <Fourth Embodiment>

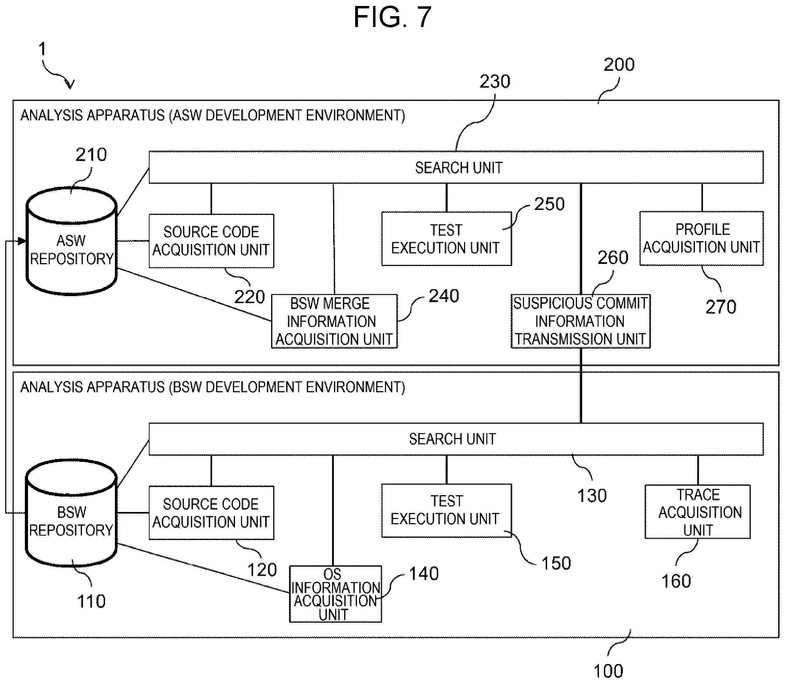

FIG. 7 is a configuration diagram of the software analysis system 1 according to a fourth embodiment of the invention. The software analysis system 1 is a system that performs the software analysis method described in the first to third embodiments, and includes an analysis apparatus 100 and an analysis apparatus 200. The analysis apparatus 100 is an apparatus that searches for a commit on the BSW side, and also serves as a development environment of the BSW. The analysis apparatus 200 is an apparatus that searches for a commit on the ASW side, and also serves as a development environment of the ASW.

The analysis apparatus 200 (second analysis apparatus) includes an ASW repository 210 (second repository), a source code acquisition unit 220, a search unit 230 (second search unit), a BSW merge information acquisition unit 240, a test execution unit 250, a suspicious commit information transmission unit 260, and a profile acquisition unit 270. The ASW repository 210 is a database in which the version management tool of the ASW stores past versions of the source code of the ASW. The source code acquisition unit 220 acquires each version of the source code of the ASW from the ASW repository 210. The search unit 230 searches for a test target version (on the ASW side) by the binary search described in the first to third embodiments. The BSW merge information acquisition unit 240 specifies a commit that incorporates the BSW among the past versions of the ASW. The test execution unit 250 performs the performance test on the ASW. The profile acquisition unit 270 acquires the profile information described in the second embodiment. When there is a function whose call frequency is changed by a reference value or more in the profile information (for example, in FIG. 6A, the function is ranked 10th in C2, but the rank is raised by 5 or more in C9), the suspicious commit information transmission unit 260 notifies the analysis apparatus 100 of this fact.

The analysis apparatus 100 (first analysis apparatus) includes a BSW repository 110 (first repository), a source code acquisition unit 120, a search unit 130 (first search unit), an OS information acquisition unit 140, a test execution unit 150, and a trace acquisition unit 160. The BSW repository 110 is a database in which the version management tool of the BSW stores past versions of the source code of the BSW. The source code acquisition unit 120 acquires each version of the source code of the BSW from the BSW repository 110. The search unit 130 searches for a test target version (on the BSW side) by the binary search described in the first to third embodiments. The OS information acquisition unit 140 acquires the OS parameter and a change point thereof described in the third embodiment. The compile option and a change point thereof may also be acquired. The test execution unit 150 performs the performance test on the BSW. The trace acquisition unit 160 acquires the trace information described in the third embodiment.

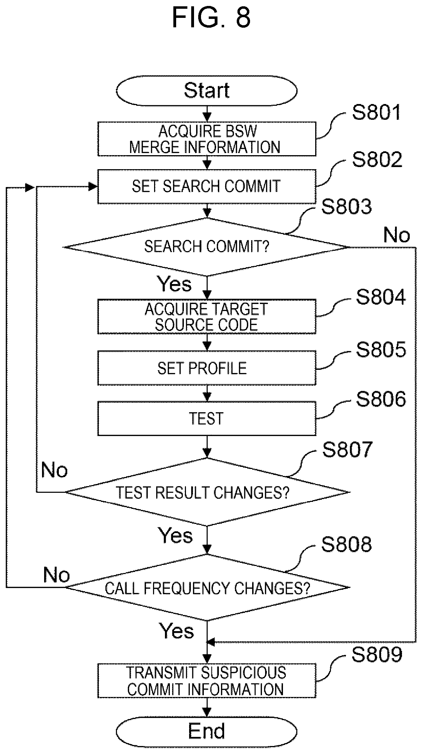

FIG. 8 is a flowchart showing an operation of the analysis apparatus 200. Here, the procedure described in the second embodiment will be described as an example. This flowchart is performed with the start time point in FIG. 4A (or FIG. 6A) as an initial state. Hereinafter, each step in FIG. 8 will be described.

### (FIG. 8: Steps S801 to S803)

The BSW merge information acquisition unit 240 specifies the commit that incorporates the BSW among the past versions of the ASW (S801). The search unit 230 determines the search target on the ASW side (a version to be investigated by performing the test for presence or absence of the cause of the performance deterioration) (S802). Specifically, a version where the BSW is incorporated among the past versions of the ASW is determined as the search target. When the search target is determined, the processing proceeds to S804 (S803: Yes), and when the search target cannot be determined, the processing skips to S809 (S803: No).

### (FIG. 8: Steps S804 to S807)

The source code acquisition unit 220 acquires the ASW source code of a search target commit (S804). When there is profile information to be set prior to the test, the test execution unit 250 sets the profile information (S805) and then performs the test on the search target commit (S806). The profile information may also be acquired in S805. The test execution unit 250 performs S802 to S806 while changing the search target commit until the test result changes (S807). Specifically, the search is performed using the method of the binary search until a commit having a test result with no problem and a commit having a problematic test result are specified among search target commits.

### (FIG. 8: Steps S808 and S809)

The search unit 230 performs S802 to S807 until a commit where the call frequency is changed by the reference value or more when compared to that in C9 in the profile information can be specified (S808). In the example in FIG. 6A, steps S802 to S807 are performed until the commit C2 where the call frequency of the function bsw_func2 is greatly changed when compared to that in C9 is specified. At a time point when the commit is specified, the suspicious commit information transmission unit 260 notifies the analysis apparatus 100 of this fact and a name of the function whose call frequency is greatly changed (S809).

### (FIG. 8: Step S809: Supplement)

First embodiment: As described in the supplement, there may be a case where it is not necessary to perform a further search on the BSW side after the search on the ASW side ends. In this case, it is determined that there is no search target commit in S803, the BSW side is notified of this fact in S809, and thus the operation as the software analysis system 1 can be ended.

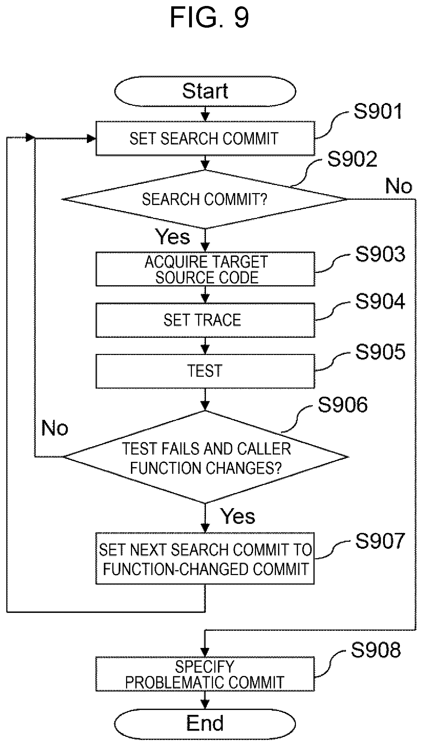

FIG. 9 is a flowchart showing an operation of the analysis apparatus 100. Here, an operation on the BSW side corresponding to FIG. 8 (an operation example using the trace information) will be described as an example. This flowchart is started at a time point when a repository to be searched is switched from the ASW side to the BSW side in the second embodiment (the second performance test in FIG. 6B).

### (FIG. 9: Steps S901 and S902)

The search unit 130 determines the search target on the BSW side (a version to be investigated by performing the test for presence or absence of the cause of the performance deterioration) (S901). Specifically, when S901 is performed for a first time, a BSW side version that is incorporated into a version whose test result is problematic on the ASW side is set as a search start point. After the second time, a version whose test result is problematic is searched for using the method of the binary search. If there is a search target commit, the processing proceeds to S903, and if not, the processing skips to S908 (S902).

### (FIG. 9: Steps S903 to S907)

The source code acquisition unit 120 acquires the BSW source code of the search target commit (S903). When there is trace information to be set prior to the test, the test execution unit 150 sets the trace information (S904) and then performs the test on the search target commit (S905). The trace information may also be acquired in S904. After specifying a commit whose test result is problematic (the commit C5 in FIG. 6B), the test execution unit 150 executes S901 to S905 until a time point when a caller function (bsw_init in FIG. 6B) in the trace information in a previous commit is changed is specified (S906). The search unit 130 sets a target commit for a next search to be a commit at the time point when the caller function is changed (S907). In FIG. 6B, the commit C4 is set as the next search target.

### (FIG. 9: Step S908)

According to the above procedure, the search unit 130 specifies a problematic location (a problematic version) that causes the performance deterioration on the BSW side. The search unit 130 outputs data describing the specified problematic location, a screen interface, and the like.

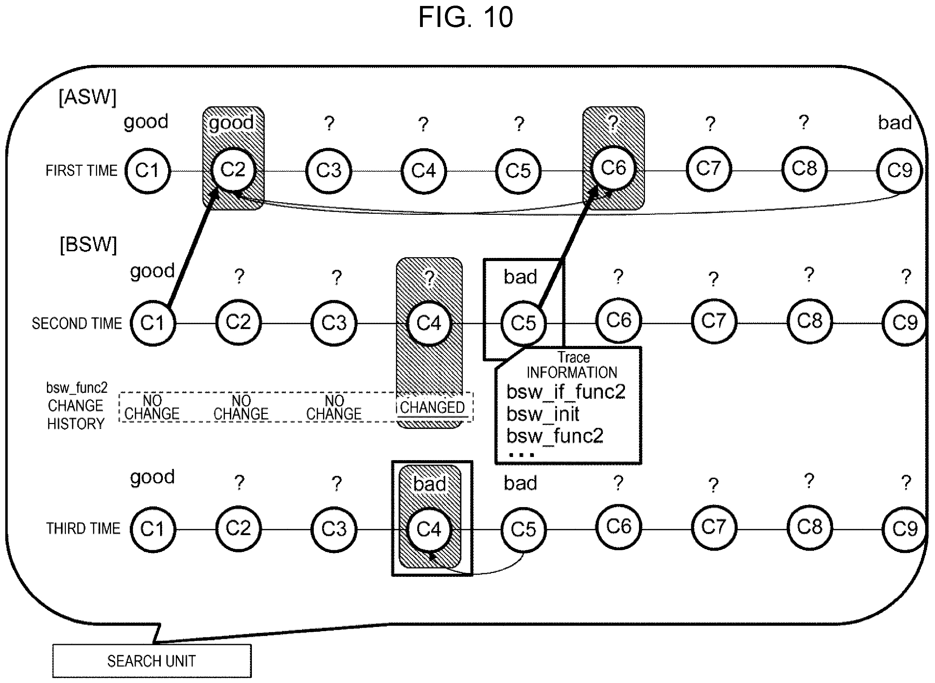

FIG. 10 is an example of the screen interface that visualizes and presents a result of specifying the problematic location that causes the performance deterioration. The search unit 130 or 230 can visualize the problematic location (the version that causes the problem on the BSW side) specified by the above procedure and a search process thereof, and can present the same as, for example, a screen interface. As specific visualized contents, FIGS. 4A and 4B and FIGS. 6A and 6B may be presented directly or processes thereof may be presented in time series. Alternatively, data describing a visualization result may be output and may be reproduced on another apparatus.

### <Modifications of the Invention>

The invention is not limited to the above embodiments and includes various modifications. For example, the above embodiments have been described in detail to facilitate understanding of the invention, and the invention is not necessarily limited to those including all the configurations described above. In addition, a part of a configuration according to a certain embodiment can be replaced with a configuration according to another embodiment, and a configuration according to another embodiment can be added to a configuration according to a certain embodiment. In addition, another configuration can be added to a part of a configuration of each embodiment, and the part of the configuration of each embodiment can be deleted or replaced with another configuration.

In the above embodiments, an example has been described in which the version of the source code is searched for by the binary search, and the invention can also be applied to a case where another search method is used. That is, by narrowing down versions that are search targets using the method described in the above embodiments, the same effects as those in the above embodiments can still be exhibited even using a search method other than the binary search.

In the above embodiments, the functional units of the analysis apparatuses 100 and 200 can be implemented by hardware such as a circuit device where functionality thereof is implemented, or can also be implemented by a computation apparatus such as a central processing unit (CPU) executing software where the functionality is implemented.

In the above embodiments, the ECU is shown as an example of a system including a plurality of pieces of software, and the invention may also be applied to another software system.

### Reference Signs List

1: software analysis system
100: analysis apparatus
110: BSW repository
130: search unit
200: analysis apparatus
210: ASW repository
230: search unit

## Claims

1. A software analysis system comprising:
a first analysis apparatus configured to execute a performance test on first software; and
a second analysis apparatus configured to execute a performance test on second software, wherein
the first analysis apparatus includes:
a first repository that accumulates software information including update information of the first software; and
a first search unit that searches for a plurality of pieces of the first software accumulated in the first repository based on the update information of the first software,
the second analysis apparatus includes:
a second repository that accumulates software information including update information of the second software; and
a second search unit that searches for a plurality of pieces of the second software accumulated in the second repository based on the update information of the second software,
when a performance degradation of the second software is detected by executing the performance test on the second software, the second search unit
retrieves the update information in the second repository, specifies the second software of one or more old versions that are updated by merging the update information of the first software, executes a test on the second software of the specified old versions, and specifies the first software that contributes to performance deterioration of the second software, or
retrieves the update information in the second repository and specifies the second software of one or more old versions where reference information of the first software is updated to specify the first software, and
transmits information on the specified first software to the first analysis apparatus, and
the first search unit
specifies the first software of one or more old versions stored in the first repository based on the information on the specified first software transmitted from the second search unit, and
executes the performance test on the first software of the old versions to specify the first software where performance deterioration occurs.

2. The software analysis system according to claim 1, wherein
the second search unit executes a test only on the second software of a version updated by merging the update information of the first software among the second software of the old versions, to specify, among the second software of the old versions, a version where performance deterioration occurs and a version where no performance deterioration occurs,
the first search unit specifies, as two endpoints of versions of the first software searched for from the first repository, a version of the first software merged with each of the version where the performance deterioration occurs and the version where no performance deterioration occurs of the second software specified by the second search unit, and
the first search unit executes the performance test on the versions of the first software between the specified two endpoints to specify a version of the first software where performance deterioration occurs.

3. The software analysis system according to claim 2, wherein
when no performance deterioration occurs in the version updated by merging the update information of the first software among the second software of the old versions, the software analysis system estimates that a cause of the performance deterioration in the second software is attributed to the second software.

4. The software analysis system according to claim 2, wherein
when no performance deterioration occurs in the versions of the first software at the two endpoints specified by the first search unit, the software analysis system estimates that a cause of the performance deterioration in the second software is attributed to the second software.

5. The software analysis system according to claim 2, wherein
the second search unit acquires statistics on call frequency of functions called by the second software,
the second search unit specifies, among the functions in the statistics, as a deterioration cause candidate function, a function which is provided by the first software and whose call frequency differs by a predetermined value or more between the version where performance deterioration occurs and the version where no performance deterioration occurs among the versions of the second software, and
the first search unit specifies, based on an update history of the deterioration cause candidate function, as a cause candidate of the performance deterioration in the second software, a version where the deterioration cause candidate function is changed from a previous version among the versions of the first software between the two endpoints.

6. The software analysis system according to claim 5, wherein
the first search unit acquires trace information describing an order of functions called by the first software,
the first search unit specifies, based on the trace information, a caller function that calls the deterioration cause candidate function, and
the first search unit specifies, from an update history of the caller function, as the cause candidate of the performance deterioration in the second software, a version where the caller function is changed from a previous version among the versions of the first software between the two endpoints.

7. The software analysis system according to claim 6, wherein
when the deterioration cause candidate function is changed from the previous version in the versions of the first software between the two endpoints, the first search unit searches for the version of the first software where the deterioration cause candidate function is changed from the previous version without searching for the version of the first software where the caller function is changed from the previous version, and
when the deterioration cause candidate function is not changed from the previous version in the version of the first software between the two endpoints, the first search unit searches for the version of the first software where the caller function is changed from the previous version.

8. The software analysis system according to claim 1, wherein
the reference information is at least one of change information of a system call function of the first software, change information of an OS referenced by the first software, and change information of a compiler of the first software.

9. The software analysis system according to claim 2, wherein
the first search unit acquires, as the reference information, at least one of change information describing a setting change in an OS referenced by the first software or change information describing a change in a compile option of a compiler of the first software, and
the first search unit specifies, as a cause candidate of the performance deterioration in the second software, a version where the change information describes that a setting of the OS or the compile option is changed from a previous version among the versions of the first software between the two endpoints.

10. The software analysis system according to claim 1, wherein
at least one of the first search unit or the second search unit outputs a result that visualizes at least one of a process of the search and a result of the test.

11. The software analysis system according to claim 1, wherein
the first search unit and the second search unit specify the first software and the second software by a binary search.

12. A software analysis method of analyzing software by a first analysis apparatus that executes a performance test on first software and a second analysis apparatus that executes a performance test on second software, the method comprising:
performing, by the first analysis apparatus, a step of searching for a plurality of pieces of the first software accumulated in a first repository that accumulates software information including update information of the first software based on the update information of the first software; and
performing, by the second analysis apparatus, a step of searching for a plurality of pieces of the second software accumulated in a second repository that accumulates software information including update information of the second software based on the update information of the second software, wherein
the step of searching for the second software includes, when a performance degradation of the second software is detected by executing the performance test on the second software,
retrieving the update information in the second repository, specifying the second software of one or more old versions that are updated by merging the update information of the first software, executing a test on the second software of the specified old versions, and specifying the first software that contributes to performance deterioration of the second software, or
retrieving the update information in the second repository and specifying the second software of one or more old versions where reference information of the first software is updated to specify the first software, and
transmitting information on the specified first software to the first analysis apparatus, and
the step of searching for the first software includes
specifying the first software of one or more old versions stored in the first repository based on the information on the specified first software transmitted from the second analysis apparatus, and
executing the performance test on the first software of the old versions to specify the first software where performance deterioration occurs.
